# EUROPEAN PATENT APPLICATION

(11) **EP 4 468 141 A1**
(43) Date of publication of application: **27.11.2024**
(21) Application number: 22927854.4
(22) Date of filing: 28.02.2022
(51) Int. Cl.: G06F 8/30

(54) **INTERFACE MAPPING METHOD AND APPARATUS, AND ELECTRONIC DEVICE AND COMPUTER-READABLE MEDIUM**

(71) Applicant: Siemens Aktiengesellschaft, 80333 München (DE)
(72) Inventor: ZHU, Yipeng, Suzhou Gongye Yuanqu Jiangsu 215025 (CN); FEI, Tao, Shanghai 201102 (CN)
(74) Representative: Isarpatent
(86) International application number: PCT/CN2022/078308
(87) International publication number: WO 2023/159573

(57) **Abstract**

The embodiments of the present application mainly relate to the technical field of industry, and in particular to an interface mapping method and apparatus, and an electronic device and a computer-readable medium. The method comprises: converting an open API description file of a microservice into a first communication standard interface description file; and mapping, to a functional block corresponding to a functional interface, a plurality of parameter names in at least one functional interface in the first communication standard interface description file.

## Description

### Technical field

Embodiments of the present application mainly relate to the technical field of industry, in particular to an interface mapping method and apparatus, an electronic device and a computer-readable medium.

### Background art

Low-code platforms provide a graphical user interface containing reusable objects, allowing end users to develop their own service programs on low-code platforms at a low cost. If an application program constructed by a user in advance in an IT domain/OT domain is to be embodied in a low-code platform, so that the execution of the application program constructed in the IT domain/OT domain can be controlled via the low-code platform, one way of achieving this at present is to integrate as large a variety of communication standards as possible in the low-code platform, due to the fact that different application programs often use different communication standards; however, this method is very costly and requires a lot of effort. Conversely, another way is to have a low-code platform define its own platform standard, so that the process of an application program constructed by the user in the IT domain/OT domain must be established on this platform standard in order to be carried out, but this method obviously raises the barrier to entry.

### Summary of the invention

Embodiments of the present application provide an interface mapping method and apparatus, a platform and a computer-readable medium, for quickly and conveniently calling a functional interface of a microservice in a functional block of a low-code platform.

In a first aspect, an interface mapping method is provided, comprising: converting an open API description file of a microservice to a first communication standard interface description file; mapping multiple parameter names in at least one functional interface in the first communication standard interface description file into a functional block corresponding to the functional interface.

In a second aspect, an interface mapping apparatus is provided, component parts for performing the steps of the method provided in the first aspect.

In a third aspect, an electronic device is provided, comprising: at least one memory, configured to store computer-readable code; and at least one processor, configured to call the computer-readable code, to perform the steps of the method provided in the first aspect.

In a fourth aspect, a computer-readable medium is provided, the computer-readable medium having stored thereon computer-readable instructions which, when executed by a processor, cause the processor to perform the steps of the method provided in the first aspect.

### Brief description of the drawings

The drawings below are merely intended to illustrate and explain embodiments of the present application schematically, without limiting the scope thereof. In the drawings:
Fig. 1 is a flow chart of an interface mapping method according to an embodiment of the present application.
Fig. 2 is a schematic drawing of an interface mapping method according to an embodiment of the present application.
Fig. 3 is a schematic drawing of an interface mapping apparatus according to an embodiment of the present application.
Fig. 4 is a schematic drawing of an electronic device according to an embodiment of the present invention.

### Key to the drawings

100: interface mapping method
101 - 102: method steps
30: interface mapping apparatus
31: microservice
32: file generator
33: OT domain parser
400: electronic device
401: memory
402: processor

### Detailed description of embodiments

The subject matter described herein is now discussed with reference to exemplary embodiments. It should be understood that the sole purpose of discussing these embodiments is to enable those skilled in the art to better understand and thereby implement the subject matter described herein, without limiting the protection scope, applicability or examples expounded in the claims. Changes may be made to the functions and arrangement of the discussed elements without departing from the scope of protection of the content of embodiments of the present application. Various processes or components may be omitted from, replaced in or added to various examples as required. For example, the described method may be performed in a different order to that described, and various steps may be added, omitted or combined. Furthermore, features described in relation to some examples may also be combined in other examples.

As used herein, the term "comprising" and variants thereof denote open terms meaning "including but not limited to". The term "based on" means "at least partly based on". The terms "one embodiment" and "an embodiment" mean "at least one embodiment". The term "another embodiment" means "at least one other embodiment". The terms "first", "second", etc. may denote different or identical objects. Other definitions may be included below, whether explicit or implicit. Unless clearly specified in the context, the definition of a term is the same throughout the description.

A low-code platform is essentially computer software, which may be deployed on an IPC (industrial computer) or SBC (single-board computer), and may be expanded to processors, computers, processors, etc. It allows users to perform low-code development on a graphical user interface.

A workcell may be a system or equipment combination capable of realizing a relatively complete and independent control process and operation. In embodiments of the present application, workflows are created with workcells as the basic unit; this is more in keeping with the characteristics of industrial control, and can increase development integration while reducing development complexity. For example, taking the technical field of industry as an example, workcells may be defined according to the actual industrial scenario, e.g. one process may be defined to correspond to one workcell, or one workstation in a process may be defined as one workcell, or one machine in a workstation may be defined to correspond to one workcell, etc., with different workcells having different process flows.

Embodiments of the present application are described in detail below with reference to the drawings.

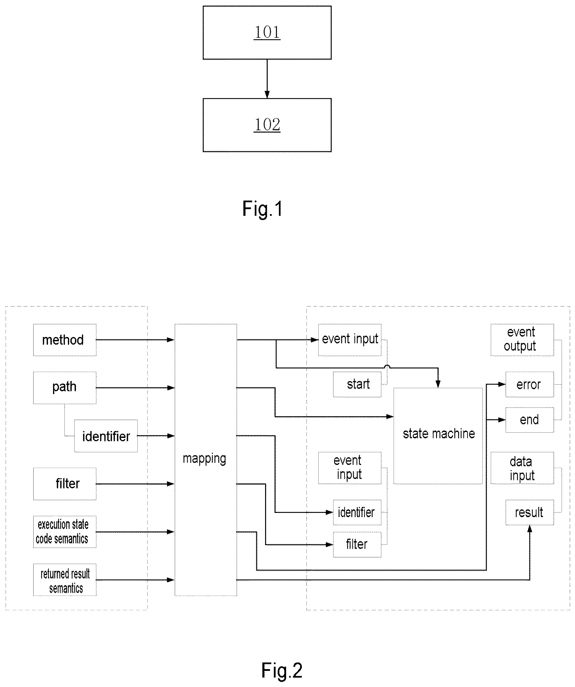

Fig. 1 is a flow chart of an interface mapping method according to an embodiment of the present application; as shown in Fig. 1, the interface mapping method 100 comprises:
Step 101, converting an open API description file of a microservice to a first communication standard interface description file.
Step 102, mapping multiple parameter names in at least one functional interface in the first communication standard interface description file into a functional block corresponding to the functional interface.

Generally, microservices are an architecture model, i.e. an architecture style, which advocates dividing a single application program into a group of small services, each service running in its own independent process, the services being coordinated with each other and cooperating with each other, to provide final value to the user. Each service is constructed around a specific operation, and can be independently deployed to a production environment, production-like environment, etc. The specific implementation of workcells can be controlled via microservices. For example, a microservice providing component detection can be used to control a corresponding workcell to perform a component detection action.

An open API is an application of a service-type website; website service providers package their own website services as a series of APIs (application programming interfaces) and make them open to the public, for use by third party developers, and the APIs that are made open to the public are called open APIs.

A low-code platform may provide a user with operations to sequentially connect different functional blocks on a graphical user interface and perform instantiation configuration, to form a corresponding workflow, which may define operations to be performed by a workcell.

A functional interface in the first communication standard interface description file is an interface corresponding to a function in a microservice. For example, in the case of a microservice providing component detection, functional interfaces of the microservice include: a photography interface, a grabbing interface and a moving interface; by associating different functional interfaces with different functional blocks, and displaying the corresponding functional blocks as reusable objects on a graphical user interface, the user can drag out a preset object on the graphical user interface, to generate a corresponding functional block instance, and a functional interface of a microservice can be called quickly by means of the functional block instance, so as to control the execution of a function corresponding to this functional interface. Embodiments of the present application reduce the difficulty of integrating different application fields and low-code platforms. In addition, embodiments of the present application also offer users the possibility of combining different functional interfaces flexibly on a graphical user interface; not only can different functional interfaces in the same microservice by combined flexibly, but also, different functional interfaces of different microservices can be combined. Suppose that one microservice uses a first communication standard interface, while another microservice uses a second communication standard interface; then field differences of different access standards can be blocked by applying the present method, i.e. environment dependence is reduced.

Optionally, before the open API description file of the microservice is converted to the first communication standard interface description file, a portion of all the interfaces in the microservice may be exposed in the open API description file of the microservice by the user according to actual service requirements.

Optionally, the first communication standard may be an OT domain interface as well as an IT domain interface, and specifically may comprise: RESTful, Modbus, PROFINET or OPC UA, etc. Optionally, when the first communication standard interface is an IT domain interface, an OT domain low-code platform can control the execution of a microservice constructed by the IT domain by means of the present method. In this way, fast merging of the IT domain and the OT domain is achieved.

Optionally, all parameter names in at least one functional interface may be mapped into a functional block corresponding to the functional interface.

Optionally, after multiple parameter names in at least one functional interface in the first communication standard interface description file have been mapped into the functional block corresponding to the functional interface, a functional block interface description file may be generated. A workflow description file containing the functional block is generated according to the functional block interface description file. The workflow description file is run, and the first communication standard interface is called to control the execution of a function corresponding to the functional interface in at least one microservice.

Optionally, after multiple parameter names in at least one functional interface in the first communication standard interface description file have been mapped into the functional block corresponding to the functional interface, a functional block interface description file may be generated, and stored in a database.

In an embodiment, the first communication standard interface is a Restful interface. The multiple parameter names include: method, path, filter, execution state code semantics and returned result semantics. Optionally, multiple parameter names in at least one functional interface in the Restful interface description file are mapped into a functional block corresponding to the functional interface; as shown in Fig. 2, the mapping method specifically comprises the following:
a method is mapped to a start event in an event input port of a functional block, and the method is mapped into a first logic code of a state machine of the functional block;
a path is mapped into a second logic code of the state machine of the functional block;
an identifier in the path is mapped to a data input port of the functional block, and first data is added;
a filter is mapped to a data input port of the functional block, and second data is added;
execution state code semantics representing an error are mapped to an error event in an event output port of the functional block; and execution state code semantics representing termination are mapped to a termination event in the event output port of the functional block;
returned result semantics are mapped to a data output port of the functional block, and a first event is added.

Optionally, adding first data comprises: adding first data with identifier as a name. Adding second data comprises: adding second data with filter as a name. Adding a first event comprises: adding a first event with result as a name. The purpose of this is to clarify the corresponding mapping relationship for the user, to facilitate management by the user.

By means of embodiments of the present application, at least one functional interface in a Restful interface of a microservice can be called quickly and conveniently in a low-code platform. If the parameter names of all of the functional interfaces in the Restful interface are mapped into the corresponding functional blocks, all of the functional interfaces in the Restful interface of the microservice can thereby be called.

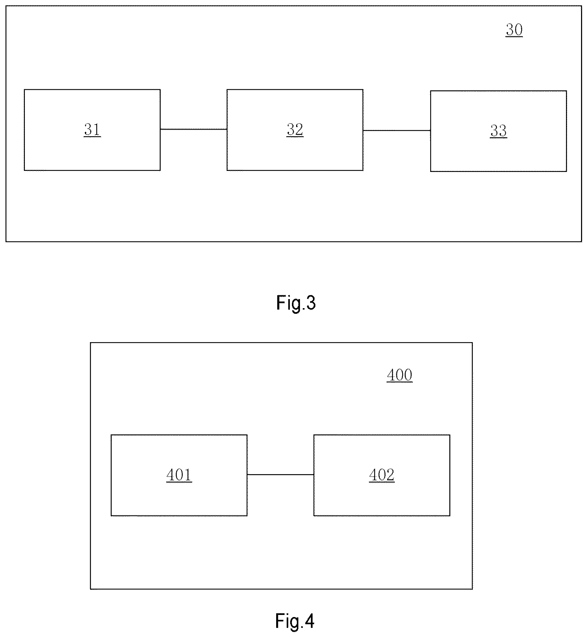

Fig. 3 is a schematic drawing of an interface mapping apparatus 30 according to an embodiment of the present application; as shown in Fig. 3, the interface mapping apparatus 30 comprises: a microservice 31, configured to: send an open API description file to a file generator 32;
the file generator 32, configured to: convert the open API description file of the microservice to a first communication standard interface description file, and send the first communication standard interface description file to an OT domain parser 33;
the OT domain parser 33, configured to: map multiple parameter names in at least one functional interface in the first communication standard interface description file into a functional block corresponding to the functional interface.

OT domain equipment may include but is not limited to: Internet of Things (IoT) equipment, programmable logic controllers (PLC), robots (robotics), manual processes, industrial personal computers (IPC), etc.

IT domain equipment may include but is not limited to: manufacturing operation management (MOM) systems, manufacturing execution systems (MES), enterprise resource planning (ERP) systems, enterprise service buses (ESP), product lifecycle management (PLM) systems, etc.

Embodiments of the present application further propose an electronic device 400. Fig. 4 is a schematic drawing of an equipment control platform 400 according to an embodiment of the present application. As shown in Fig. 4, the equipment control platform 400 comprises a processor 402 and a memory 401, the memory 401 having instructions stored therein, wherein the instructions, when executed by the processor 401, realize the method 100 as described above.

The at least one processor 402 may comprise a microprocessor, an application-specific integrated circuit (ASIC), a digital signal processor (DSP), a central processing unit (CPU), a graphical processing unit (GPU), a state machine, etc. Embodiments of computer-readable media include but are not limited to floppy disks, CD-ROM, magnetic disks, memory chips, ROM, RAM, ASIC, configured processors, fully optical media, all magnetic tapes or other magnetic media, or any other media from which instructions can be read by a computer processor. Additionally, various other forms of computer-readable media can send or carry instructions to a computer, including routers, private or public networks, or other wired and wireless transmission devices or channels. The instructions may comprise code in any computer programming language, including C, C++, C language, Visual Basic, java and JavaScript.

In addition, embodiments of the present application further provide a computer-readable medium, having stored thereon computer-readable instructions which, when executed by a processor, cause the processor to perform the OT domain low-code development method described above. Embodiments of computer-readable media include floppy disks, hard disks, magneto-optical disks, optical disks (e.g. CD-ROM, CD-R, CD-RW, DVD-ROM, DVD-RAM, DVD-RW, DVD+RW), magnetic tape, non-volatile memory cards and ROM. Optionally, computer-readable instructions may be downloaded from a server computer or the cloud via a communication network.

It should be explained that not all of the steps and modules in the procedures and system structure drawings above are necessary; certain steps or modules may be omitted according to actual needs. The order in which the steps are performed is not fixed, and may be adjusted as needed. The system structures described in the embodiments above may be physical structures or logic structures, i.e. some modules might be realized by the same physical entity, or some modules might be realized by multiple physical entities separately, or may be realized jointly by certain components in multiple independent devices.

## Claims

1. An interface mapping method, **characterized by** comprising:
- converting (101) an open API description file of a microservice to a first communication standard interface description file;
- mapping (102) multiple parameter names in at least one functional interface in the first communication standard interface description file into a functional block corresponding to the functional interface.

2. The method as claimed in claim 1, **characterized in that** the first communication standard interface is an IT domain interface.

3. The method as claimed in claim 1, **characterized in that** the first communication standard comprises: RESTful, Modbus, PROFINET or OPC UA.

4. The method as claimed in claim 1, **characterized in that** the first communication standard interface is a Restful interface; and the multiple parameter names comprise: method, path, filter, execution state code semantics and returned result semantics.

5. The method as claimed in claim 1, **characterized in that** after mapping multiple parameter names in at least one functional interface in the first communication standard interface description file into a functional block corresponding to the functional interface, the method further comprises:
- generating a functional block interface description file;
- generating a workflow description file containing the functional block according to the functional block interface description file;
- running the workflow description file, and calling a first communication standard interface to control the execution of a function corresponding to at least one functional interface.

6. The method as claimed in claim 4, **characterized in that** mapping multiple parameter names in at least one functional interface in the Restful interface description file into a functional block corresponding to the functional interface comprises:
- mapping a method to a start event in an event input port of the functional block; and mapping the method into a first logic code of a state machine of the functional block;
- mapping a path into a second logic code of a state machine of the functional block;
- mapping an identifier in the path to a data input port of the functional block, and adding first data;
- mapping a filter to a data input port of the functional block, and adding second data;
- mapping execution state code semantics representing an error to an error event in an event output port of the functional block; and mapping execution state code semantics representing termination to a termination event in an event output port of the functional block;
- mapping returned result semantics to a data output port of the functional block, and adding a first event.

7. The method as claimed in claim 6, **characterized in that**
- said adding of first data comprises: adding first data with identifier as a name;
- said adding of second data comprises: adding second data with filter as a name;
- said adding of a first event comprises: adding a first event with result as a name.

8. An interface mapping apparatus, **characterized by** comprising:
- a microservice (31), configured to:
- send an open API description file to a file generator (32);
- the file generator (32), configured to:
- convert an open API description file of a microservice to a first communication standard interface description file, and send the first communication standard interface description file to an OT domain parser (33);
- the OT domain parser (33), configured to:
- map multiple parameter names in at least one functional interface in the first communication standard interface description file into a functional block corresponding to the functional interface.

9. An electronic device, **characterized by** comprising:
at least one memory (401), configured to store computer-readable code;
at least one processor (402), configured to call the computer-readable code, to perform a step of the method as claimed in any one of claims 1 - 7.

10. A computer-readable medium, **characterized in that** the computer-readable medium has stored thereon a computer-readable instruction which, when executed by a processor, causes the processor to perform a step of the method as claimed in any one of claims 1 - 7.
